# EUROPEAN PATENT APPLICATION

(11) **EP 3 293 446 A1**
(43) Date of publication of application: **14.03.2018**
(21) Application number: 16306136.9
(22) Date of filing: 09.09.2016
(51) Int. Cl.: F21V 7/00, F21V 8/00, F21S 4/20

(54) **ILLUMINATION ARRANGEMENT**

(71) Applicant: Tyco Electronics Canada ULC, Markham, ON L3R 1E1 (CA); Tyco Electronics France SAS, 95300 Pontoise (FR)
(72) Inventor: IORDACHE, Lucian, Woodbridge, Ontario L4L 3E1 (CA); GYIMES, Andras, Toronto, Ontario M4L 3W4 (CA); SAGNA, Boubacar, 95800 Cergy (FR)
(74) Representative: Grünecker Patent- und Rechtsanwälte PartG mbB

(57) **Abstract**

The invention relates to an illumination arrangement (1) for providing a strip-like illumination, the arrangement (1) comprising at least one carrier assembly (3), the carrier assembly (3) comprising at least two light source mounting positions (9) for placing and/or mounting at least one light source (11) each, at least one reflector (5) which is arranged basically opposite to the at least two light source mounting positions (9), and at least one optical wave guide element (7) for collecting and guiding light from at least two light sources (11). In order to provide an arrangement which improves homogenization and/or color mixing of at least two light sources, it is intended according to the invention that the at least one reflector (5) and the at least one optical wave guide element (7) are arranged relative to the at least one carrier assembly (3) such that at least a majority of light rays (15) starting at the light source mounting positions (9) reaches the optical wave guide element (7) indirectly via reflection on the at least one reflector (5).

## Description

The invention is related to an illumination arrangement for providing a strip-like illumination, the arrangement comprising at least one carrier assembly, the carrier assembly comprising at least two light source mounting positions for placing and/or mounting at least one light source each, at least one reflector which is arranged basically opposite to the at least two light source mounting positions, and at least one optical wave guide element for collecting and guiding light from at least two light sources.

It is common in the prior art to use at least two light sources for providing light. For example, LED-strips make use of such arrangements and are commonly used for illumination and signaling purposes. A drawback of these light arrangements is that they may provide illumination with an inhomogeneous intensity distribution. Further, in the case that multi-colored light sources are used, the illumination may have an inhomogeneous color distribution. However, it may be required to provide illumination which itself is strip-like with homogeneous intensity and/or color distribution.

It is therefore an object of the invention to provide an arrangement as mentioned above, which provides illumination with an improved intensity and/or color distribution.

This object is reached for an arrangement according to the invention in that the at least one reflector and the at least one optical wave guide element are arranged relative to the at least one carrier assembly such that at least a majority of light rays starting at the light source mounting positions reaches the optical wave guide element indirectly via reflection on the at least one reflector.

The arrangement according to the invention allows the light first to be reflected by the reflector before it reaches the optical wave guide element. By being reflected on the reflector, a cone of light, which may be provided if light sources are arranged at the light source mounting positions, is further spread out before it reaches the optical wave guide element. In the optical wave guide element, the light usually undergoes multiple reflections, whereby it is even further spread it out. By these multiple reflections, on the reflector and in the optical wave guide element, the light provided from at least two light sources on the light source mounting positions is homogenized and/or color mixed and thereby diffused.

In the following, further improvements of the invention are described. The additional improvements may be combined independently of each other, depending on whether a particular advantage of a particular improvement is needed in a specific application.

According to a first advantageous improvement of the arrangement, the at least one carrier assembly may be strip-like, wherein a longitudinal direction of the strip-shape extends basically parallel to a direct line between the at least two light source mounting positions.

The at least one reflector and the at least one optical wave guide element may be arranged in light cones of the at least two light sources, if present, wherein the at least one reflector is exposed to larger portion of each light cone than the at least one optical wave guide element, in order to allow the majority of light to be reflected on the reflector before reaching the at least one optical wave guide element.

According to another advantageous improvement of the arrangement, the at least one optical wave guide element may extend behind the at least two light source mounting positions. In other words, an outlet of the at least one optical wave guide element for emitting collected light may be arranged behind the at least two light source mounting positions, in particular in a direction opposite to a main emission direction. This may prevent direct transmission of light from the light source mounting position to an external observer. The outlet of the at least one optical wave guide element may form an exit pupil of the arrangement. An external observer may therefore only recognize light which was reflected on the reflector and guided through the wave guiding element.

The at least one optical wave guide element may have an overall shape of a flat body, in particular strip-like, wherein a longitudinal direction of the strip extends basically parallel to a direct line between the two light source mounting positions. An end face of the flat body, which preferably forms an outlet of the wave guide, may form a light emission area. Preferably, at least a majority of light rays coupled into the at least one optical wave guide element is guided to the end face.

In order to improve the coupling of light into the at least one optical wave guide element, at least one coupling area of the at least one wave guide element may be arranged between the at least one reflector and the at least one carrier assembly.

A surface of the at least one wave guide element may be exposed to the at least one reflector and/or to the at least two light source mounting positions at the coupling area. Thereby, light rays from light sources on the light source mounting positions may be reflected by the at least one reflector onto the at least one coupling area.

The at least one coupling area of the at least one optical wave guide element may be arranged opposite the at least one reflector in order to easily collect light which was reflected on the at least one reflector.

An interior of the illumination arrangement may be bordered by the at least one carrier assembly, the at least one reflector and the at least one optical wave guide element. The interior may provide room for the light to spread out in order to improve the homogenization and/or color mixing. The interior is preferably closed in directions perpendicular to a direct line between the at least two light source mounting positions in order to prevent light from exiting the arrangement with the exception of light which is directed through the at least one optical wave guide element.

In order to form a compact arrangement, a cross section orthogonally to the direct line between the at least two light source mounting positions, the at least one carrier assembly, the at least one reflector and the at least one optical wave guide element may form an overall triangular shape. Thereby, the at least two light source mounting positions may be arranged on an edge of the triangular shape, and the meeting point of the at least one carrier assembly and the at least one reflector may form a vertex of the triangular shape opposite to said edge. In particular, the vertex may by shifted with respect to the at least two light source mounting positions in a direction parallel to said edge in order to make sure that the majority of light reaches the optical wave guide element only after reflection on the at least one reflector.

The at least one optical wave guide element is preferably at least partially formed as an optical, in particular diffractive and/or refractive, diffuser. This may help to further improve the homogenization and/or color mixing of light by the arrangement.

In order to further improve the homogenization and/or color mixing of the arrangement, at least in a plane perpendicular to the at least one reflector and parallel to a direct line between the at least two light source mounting positions, an angle of reflection may differ for two different positions on the reflector at least along said direct line for two light rays having the same angle of incidence. Thereby, light spreading may further be improved.

The at least one reflector may comprise a diffusive reflective surface at least in parts. For example, the reflector may be provided with a rough surface or with other means of providing diffusive reflection.

In order to further improve the homogenization and/or color mixing, the at least one reflector may be provided with at least one diffusing element, which is basically arranged opposite at least one light source mounting position and which has an overall convex cross section in the plane perpendicular to the at least one reflector.

Preferably, the at least one reflector is formed strip-like, with a longitudinal direction of the strip being basically parallel to a direct line between the at least two light source mounting position.

The arrangement is preferably provided with at least one light flux compensation element which has a varying transmittance along a direct line between the at least two light source mounting positions and which intersects at least one light ray. The at least one light flux compensation element may compensate the original light distribution which is provided by at least two light sources. In other words, the at least one light flux compensation element may reduce the light flux in areas where the intensity delivered by the light sources has its maximum and/or may allow transmission of light in areas where the intensity is lower.

The transmittance may have its minimum at a position basically opposite to at least one light source mounting position and its maximum at a position basically opposite to a region between two light source mounting positions in order to efficiently compensate the light flux.

In order to provide a simple and compact arrangement, the at least one light flux compensation element may be arranged between at least one light source mounting position and the at least one optical wave guide element, covering the at least one optical wave guide element at least in parts.

In order to further improve the homogenization and/or color mixing, the transitions between sections of the at least one light flux compensation element with maximum and minimum transmissions are preferably smooth. If the light flux compensation element is configured to cover the at least one optical wave guide element at least in parts, then a width of the at least one light flux compensation element may alter along a direction parallel to a direct line between the at least two light source mounting positions, such that it comprises an overall curved shape. Thereby, sections with the largest widths have the lowest transmittance and are preferably arranged between light source mounting positions and the at least one optical wave guide element in order to prevent or decrease direct transmission of light from the light source mounting positions to the optical wave guide element. Consequently, sections with the lowest widths are preferably arranged at heights between two light source mounting positions each in order to allow a majority of light to reach the at least one optical wave guide element.

The at least one light flux compensation element is preferably formed monolithically with the at least one carrier assembly, at least in parts. Thereby, the arrangement may have a simple and compact structure.

In the alternative, or additionally, the at least one light flux compensation element may be formed monolithically with the at least one optical wave guide element. For example, if the optical wave guide element is made from a plastics material, such as polycarbonate, the at least one light flux compensation element may be formed as a thickness variation in the plastic material.

The at least one light flux compensation element as described above may also be used to serve other purposes. For example, the light flux compensation element may be used for designing the light output for a required illumination. For example, the at least one light flux compensation element may be used for the creation of dim regions in the light output. This can be achieved by forming and or arranging the element such that in certain regions the transmittance is low enough for causing a drop in the light distribution. It should be noted that this shall not exclude usage of the at least one light flux compensation element for homogenizing and/or color mixing light as described above. For example, the mentioned dim areas may be created at positions which differ from the regions between two adjacent light source mounting positions.

The illumination arrangement may further be improved in that it further comprises at least one light source on each light source mounting position. Thereby, at least two adjacent light source mounting positions are preferably provided with at least one plurality of light sources, each light source having a different color. In particular, each light source mounting position may be provided with a multicolored LED, in particular an RGB-LED.

In order to further improve the strip-like illumination, the carrier assembly may be provided with a plurality of light source mounting positions, which are arranged along a strip. A longitudinal direction of the strip preferably extends basically parallel to a direct line between at least two adjacent light source mounting positions.

In the following, the invention and its improvements are described in greater detail using exemplary embodiments and with reference to the drawings. As described above, the various features shown in the embodiments may be used independently of each other in specific applications.

In the following figures, elements having the same function and/or the same structure will be referenced by the same reference signs.

In the drawings:
- Fig. 1: shows a cross-sectional view of a preferred embodiment of an illumination assembly;
- Fig. 2: shows a perspective view of a reflector for the assembly of Fig. 1; and
- Fig. 3: shows a perspective view of a carrier assembly of the embodiment of Fig. 1.

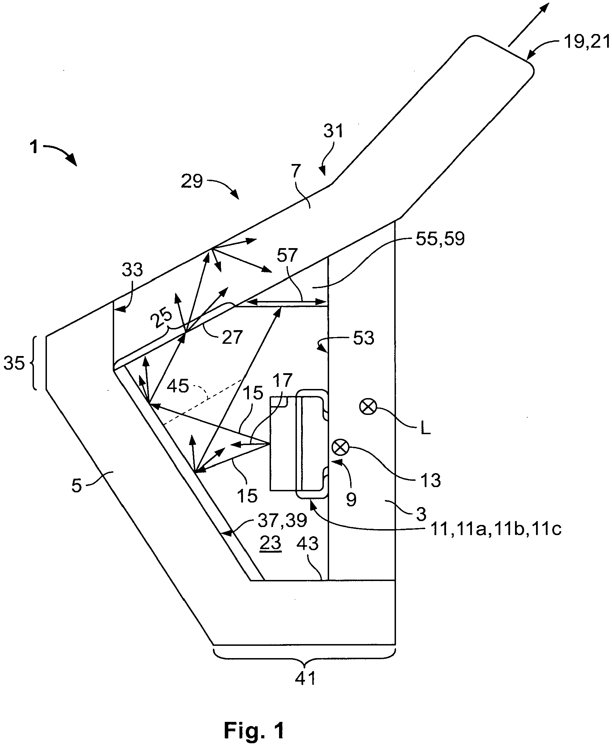

Fig. 1 shows a preferred embodiment of an illumination arrangement 1 according to the invention in a cross-sectional view. A direction of view extends along a longitudinal direction L of the illumination arrangement 1, which preferably has an overall strip-like shape.

The illumination arrangement 1 comprises a carrier assembly 3, a reflector 5, which is basically arranged opposite to the carrier assembly 3 and an optical wave guide element 7 for collecting and guiding light, which is also preferably arranged basically opposite to the carrier assembly 3.

The carrier assembly 3 has an overall strip-like shape which basically extends along the longitudinal direction L. The carrier assembly 3 is provided with a plurality, at least two, of light source mounting positions 9. These positions 9 can be used for placing and/or mounting at least one light source 11 each. In the preferred embodiment, each light source mounting position 9 is provided with a light source 11.

The light source 11 is preferably formed by a multicoloured light source, such as an RGB-LED. In this case, the light source 11 is subdivided in single coloured light sources 11 a, 11b, and 11c. In the following, the illumination arrangement 1 is described with respect to the light sources 11, when necessary. However, it should be noted that the illumination arrangement 1 according to the invention does not necessarily comprise light sources 11 on the light source mounting positions 9. The illumination arrangement 1 can be manufactured without light sources 11, and light sources 11 may be mounted on the light source mounting positions 9 later.

Preferably, the light source mounting positions 9 are arranged along a line 13 which is parallel with the longitudinal direction L. If at least two light source mounting positions 9 are present, then the line 13 represents a direct line between two adjacent light source mounting positions 9. The term line refers to the geometrical line, and not necessarily to a substantial, for example electric line. This shall not exclude the possibility of interconnecting light sources 11 or light source mounting positions 9 with electrical lines which are arranged at the mentioned geometrical lines 13.

Preferably, the reflector 5 and the optical wave guide element 7 also have an overall strip-like shape, wherein a longitudinal direction of the strip-like shapes basically extends parallel to the longitudinal direction L, in particular parallel to a direct line 13 between two adjacent light source mounting positions 9.

According to the invention, the reflector 5 and the optical wave guide element 7 are arranged relative to the carrier assembly 3 such that at least a majority of light rays 15 starting at the light source mounting positions 9 reaches the optical wave guide element 7 indirectly via reflection on the at least one reflector 5. This is preferably reached by the geometrical arrangement of the reflector 5, the optical wave guide element 7, the carrier assembly 3 and the arrangement of the light source mounting positions 9 on the carrier assembly 3.

Alternatively, this can be reached by radiation characteristics of used light sources, additional optics and/or the shape of elements such as the reflector 5 and the optical wave guide element 7.

A preferred and simple solution to let light rays 5 first be reflected on the reflector 5 before reaching the optical wave guide element 7, is the arrangement of the light source mounting positions 9 and the reflector 5 such that the reflector 5 overlaps the light source mounting positions 9 in a main direction of emission 17 which is basically perpendicular to the longitudinal direction L. Preferably, the reflector 5 also overlaps light sources 11 seen in the main emission direction 17, which is perpendicular to the longitudinal direction L.

Upon reflection on the reflector 5, light which is provided by light sources 11 is spread and therefore homogenized and colour-mixed. Light rays 15 which were reflected on the reflector 5 and also to a certain degree, light rays 15, which come directly from light sources 11, may hit the optical wave guide element 7. Light which hits the optical wave guide element 7 may penetrate into the same and be collected and guided through the optical wave guide element 7 to a light emission area 19.

The light emission area 19 may represent an exit pupil 21 for the illumination arrangement 1. By multiple internal reflections through the optical wave guide element 7, the light is further spread and thereby homogenized and/or colour mixed.

The optical wave guide element 7 extends behind the light source mounting positions 9. In other words, the light emission area 19 is arranged behind the light source mounting positions 9 in a direction parallel to the main direction of emission 17. This may assure that no direct light from light sources 11 exits the exit pupil 21.

The carrier assembly 3, the reflector 5 and the optical wave guide element 7 border an interior 23 of the illumination arrangement 1. Preferably, the interior 23 is closed in all directions perpendicular to the longitudinal direction L. This may prevent emission of light, except for light that leaves the arrangement 1 through the light emission area 19 of the optical wave guide element 7.

The optical wave guide element 7 may receive light from the interior 23 through a coupling area 25 which is arranged between the reflector 5 and the carrier assembly 3. In the coupling area 25, a surface 27 of the optical wave guide element 7 is exposed to the reflector 5 and/or light sources 11. The coupling area 25 is arranged opposite the reflector 5.

In order to further improve the homogenization and/or color mixing of light, the optical wave guide element 7 may be preferably formed as an optical diffuser 29, at least in parts. For example, the optical wave guide element 7 may at least be partially made from an opal material.

The optical wave guide element 7 may further have a bend 31. The bend 31 may be helpful for arranging the position of the light emission area 19. It should be noted, that the cross section of the optical wave guide element 7 may have any other appropriate shape. It may also be straight, curved or may meander, as long as the function as wave guide is still fulfilled.

An end face 33 of the optical wave guide element 7, which lies opposite to the exit pupil 21 abuts an end section 35 of the reflector 5. This may prevent light from exiting the optical wave guide element 7 through the end face 33. The end section 35 may have reflecting properties, such that light which is directed in side the optical wave guide element 7 towards the end face 33 may be reflected back on the reflector 5 into the optical wave guide element 7.

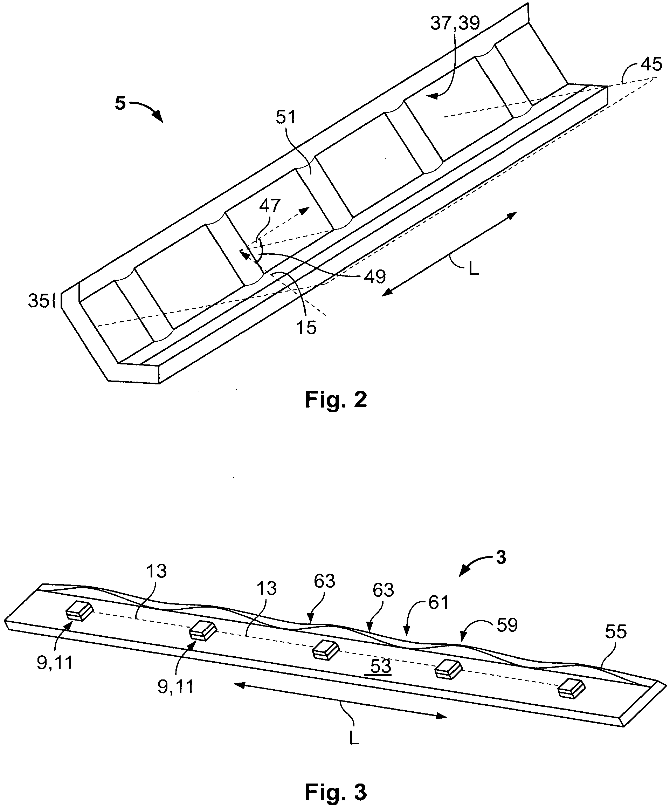

In the following, a preferred embodiment of a reflector 5 is described with respect to Figs. 1 and 2.

The reflector 5 comprises a reflector surface 37 which has a basically planar shape. The reflector surface 37 is preferably formed as a diffusive reflective surface 39 at least in parts. For example, the surface 37 may have a rough structure, which provides diffusive reflection of light.

In the end section 35, the reflector 5 is preferably inclined with respect to the remaining reflector 5, in particular with respect to the reflector surface 37. In an opposite end section 41 the reflector 5 is inclined towards the interior 23 such that the opposite end section 41 is basically parallel to main direction of emission 17. The end section 41 abuts with its surface 43 which is exposed to the interior 23 the carrier assembly 3.

In a plane 45 (indicated by the dashed line in Figs. 1 and 2), which extends perpendicular to the reflector 5, in particular to the basically planar reflector surface 37, and parallel with the longitudinal direction L, an angle of reflection 47 differs for two different positions on the reflector 5 at least along the longitudinal direction L for two light rays 15 having the same angle of incidence 49. This may be achieved by providing reflector 5 with a diffusive reflective surface 39.

Alternatively or additionally to a diffusive reflective surface 39, the reflector 5 is preferably provided with a plurality of diffusing elements 51. The diffusing elements 51 are arranged on the surface 37 and are preferably formed monolithically with same. The elements 51 basically extend perpendicular to the longitudinal direction L and are provided with an overall convex cross section in the plane 45.

In an assembled state, as shown in Fig. 1, the diffusing element 51 are each arranged directly opposite to a light source mounting position 9 across the interior 23.

If two different light rays 15 with the same angle of incidence 49 hit the reflector 5, wherein the first light ray 15 hits the diffusing element 51, and the second light ray 15 hits the reflector surface 37 in a region where no diffusing element 51 is present, then these two light rays will preferably have different angles of reflection 47, because the convex shape of the diffusing element 51 will reflect the light in another direction compared to the flat surface 37.

Now, a carrier assembly 3 is described in detail with reference to Figs. 1 and 3.

The carrier assembly 3 has an overall strip-like shape which extends longitudinally along the longitudinal direction L.

As already mentioned, the carrier assembly 3 is provided with a plurality of light source mounting positions 9. Just by way of example, Figs. 1 and 3 show a multicolored light source 11 mounted on each light source mounting position 9.

Preferably, the light source mounting positions 9 are equally spaced to each other along the longitudinal direction L. Further, the light source mounting positions 9 are preferably arranged in a row which extends along the longitudinal direction L.

The carrier assembly 3 comprises a carrier surface 53, which has an overall planar shape. The carrier surface 53 may also be reflective, in particular diffusive reflective.

Preferably, but not necessarily, the carrier assembly 3 is monolithically formed with a light flux compensation element 55. The light flux compensation element 55 may alternatively be provided as a separate part which may be affixed to another part of the assembly 1. In another alternative, or additionally, the at least one light flux compensation element 55 may be formed monolithically with the at least one optical wave guide element 7, at least in parts.

The light flux compensation element 55 has a varying transmittance along the direct lines 13 between two adjacent light source mounting positions 9. In an assembled state, the light flux compensation element 55 is arranged between the light source mounting position 9 and the optical wave guide element 7, wherein parts of the optical wave guide element 7 are covered by the light flux compensation element 55.

In a preferred embodiment, the light flux compensation element is shaped as a barrier with a varying width 57, wherein the width 57 is measured perpendicular to the longitudinal direction L and preferably parallel with the main direction of emission 17. The width 57 preferably has its maxima 59 at the heights of the light source mounting positions 9 along the longitudinal direction L. In the maxima 59, the transmittance of the light flux compensation element 55 is at its minimum. Thereby, the direct transmission of light from light sources 11 into the optical wave guide element 7 is prevented or at least reduced, because the light flux compensation element 55 may intersect the light rays 15 in the direct path between the light sources 11 and the optical wave guide element 7.

In an assembled state, the maxima 59 of the width 57 are at a position basically opposite to the light source mounting positions 9. Therefore, the transmittance has its minimum opposite to the light source mounting positions 9.

It should be noted that it may not be necessary to block all light rays 15 starting at the light sources 11 from directly reaching the optical wave guide element 7. The light flux compensation element 55 is a rather intended to even out or, in other words, homogenize the light distribution along the longitudinal direction L.

In addition to the application where a homogenized light distribution is desired, there are other applications where it is preferred to have less or no light in some sections of the optical wave guide element 7. In these cases, the light flux compensation element 55 may be shaped such that it maximizes the light ray blockage.

In the sections between two adjacent light source mounting positions 9, the width 57 of the light flux compensation element 55 has its minima 61 and therefore a maximum transmittance.

Along the longitudinal direction L, the light flux compensation element 55 has an overall curved shape, such that the transitions between the maxima 59 and minima 61 are smooth.

### REFERENCE SIGNS

- 1: illumination arrangement
- 3: carrier assembly
- 5: reflector
- 7: optical wave guide element
- 9: light source mounting position
- 11: light source
- 11a-c: single colored light source
- 13: line
- 15: light ray
- 17: main direction of emission
- 19: light emission area
- 21: exit pupil
- 23: interior
- 25: coupling area
- 27: surface
- 29: diffuser
- 31: bend
- 33: end face
- 35: end section
- 37: reflector surface
- 39: diffusive reflective surface
- 41: opposite end section
- 43: surface
- 45: plane
- 47: angle of reflection
- 49: angle of incidence
- 51: diffusing element
- 53: carrier surface
- 55: light flux compensation element
- 57: width
- 59: maxima
- 61: minima
- L: longitudinal direction

## Claims

1. Illumination arrangement (1) for providing a strip-like illumination, the arrangement (1) comprising at least one carrier assembly (3), the carrier assembly (3) comprising at least two light source mounting positions (9) for placing and/or mounting at least one light source (11) each, at least one reflector (5) which is arranged basically opposite to the at least two light source mounting positions (9), and at least one optical wave guide element (7) for collecting and guiding light from at least two light sources (11), **characterized in that** the at least one reflector (5) and the at least one optical wave guide element (7) are arranged relative to the at least one carrier assembly (3) such that at least a majority of light rays (15) starting at the light source mounting positions (9) reaches the optical wave guide element (7) indirectly via reflection on the at least one reflector (5).

2. Illumination arrangement (1) according to claim 1, **characterized in that** the at least one optical wave guide element (7) extends behind the at least two light source mounting positions (9).

3. Illumination arrangement (1) according to claim 1 or 2, **characterized in that** at least one coupling area (25) of the at least one wave guide element (7) is arranged between the at least one reflector (5) and the at least one carrier assembly (3).

4. Illumination arrangement (1) according to claim 3, **characterized in that** the at least one coupling area (25) of the at least one wave guide element (7) is arranged opposite the at least one reflector (5).

5. Illumination arrangement (1) according to any of claims 1 to 4, **characterized in that** an interior (23) of the Illumination arrangement (1) is bordered by the at least one carrier assembly (3), the at least one reflector (5) and the at least one optical wave guide element (7).

6. Illumination arrangement (1) according to any of claims 1 to 5, **characterized in that** the at least one optical wave guide element (7) is at least partially formed as an optical diffuser (29).

7. Illumination arrangement (1) according to any of claims 1 to 6, **characterized in that,** at least in a plane (45) perpendicular to the at least one reflector (5) and parallel to a direct line (13) between the at least two light source mounting positions (9), an angle of reflection (47) differs for two different positions on the reflector (5) at least along said direct line (13) for two light rays (15) having the same angle of incidence (49).

8. Illumination arrangement (1) according to claim 7, **characterized in that,** the at least one reflector (5) comprises a diffusive reflective surface (39) at least in parts.

9. Illumination arrangement (1) according to any of claims 7 or 8, **characterized in that** the at least one reflector (5) is provided with at least one diffusing element (51), which is basically arranged opposite at least one light source mounting position (9) and which has an overall convex cross section in the plane (45) perpendicular to the at least one reflector (5).

10. Illumination arrangement (1) according to any of claims 1 to 9, **characterized in that** the arrangement (1) is provided with at least one light flux compensation element (55) which has a varying transmittance along a direct line (13) between the at least two light source mounting positions (9) and which intersects at least one light ray (15).

11. Illumination arrangement (1) according to claim 10, **characterized in that** the transmittance has its minimum at a position basically opposite to at least one light source mounting position (9) and its maximum at a position basically opposite to a region between two light source mounting positions (9).

12. Illumination arrangement (1) according to claim 10 or 11, **characterized in that** the at least one light flux compensation element (55) is arranged between at least one light source mounting position (9) and the at least one optical wave guide element (7), covering the at least one optical wave guide element (7) at least in parts.

13. Illumination arrangement (1) according to any of claims 10 to 12, **characterized in that** the at least one light flux compensation element (55) is formed monolithically with the at least one carrier assembly (3) at least in parts.

14. Illumination arrangement (1) according to any of claims 10 to 13, **characterized in that** the at least one light flux compensation element (55) is formed monolithically with the at least one optical wave guide element (7) at least in parts.

15. Illumination arrangement (1) according to any of claims 1 to 14, **characterized in that** the Illumination arrangement (1) further comprises at least one light source (11) on each light source mounting position (9).
